# EUROPÄISCHE PATENTSCHRIFT

(11) **EP 1 914 203 B1**
(45) Veröffentlichungstag und Bekanntmachung des Hinweises auf die Patenterteilung: **12.12.2012**
(21) Anmeldenummer: 07117790.1
(22) Anmeldetag: 02.10.2007
(51) Int. Cl.: C02F 1/44, B01D 61/58, B01D 61/04

(54) **Verfahren und Anlage zur Behandlung von Abwässern einer Metallgießerei**
Method and plant for treating wastewater from a metal foundry
Procédé et installation pour le traitement d'eaux usées dans une fonderie de métaux

(30) Priorität: 09.10.2006 DE 102006047681
(43) Veröffentlichungstag der Anmeldung: 23.04.2008
(73) Patentinhaber: LK Metallwaren GmbH, 91126 Schwabach (DE)
(72) Erfinder: Ehard, Ferdinand, 91183, Abenberg (DE); Nutz, Franz, 90584, Allersberg (DE)
(74) Vertreter: Lang, Christian

(56) Entgegenhaltungen:
- EP-A- 0 571 744
- WO-A-2004/099087
- WO-A-2006/116533
- DE-A1- 3 605 338
- DE-A1- 19 925 471
- JP-A- 54 158 057
- US-A- 4 201 664
- US-A- 5 585 531
- US-A- 6 162 361

## Beschreibung

### HINTERGRUND DER ERFINDUNG

### GEBIET DER ERFINDUNG

Die vorliegende Erfindung betrifft ein Verfahren und eine Vorrichtung zur Behandlung von Abwässern einer Metallgießerei.

### STAND DER TECHNIK

Bei der gießtechnischen Herstellung von Produkten, insbesondere Leichtmetallprodukten, wie z.B. Gehäusen für Fahrzeugmotoren oder -getriebe fallen durch den Einsatz wasserlöslicher Betriebsmittel große Abwassermengen an. Das Abwasser ist durch die verwendeten Betriebsmittel und produktionsbedingte Leckagen stark mit organischen Substanzen verunreinigt. Die Hauptkomponente des Abwasserstroms bilden die so genannten Formtrennstoffe, speziell Öl-Wasser-Emulsionen, die eingesetzt werden, um die produzierten Gussteile nach dem Erstarren von der Gussform ohne Anhaftung trennen zu können. Üblicherweise werden vor jedem Gießzyklus die Formtrennstoffe auf die Gussform aufgesprüht, wobei die Trennstoff-Wasser-Gemische nicht nur zur Erzeugung einer Trennschicht sondern auch zur Kühlung der Formen eingesetzt werden. Bei dem Sprühprozess entstehen beachtliche Emissionen in Form von Prozessabwässern, die in Folge von Verunreinigungen nicht wieder verwendet werden können. Die Verunreinigungen werden im Wesentlichen durch Leckagen der Gusseinrichtungen hervorgerufen. Unter anderem kann es sich dabei um Schmieröle, Wärmeträgeröle, Kolbentrennstoffe und Hydraulikmedien handeln.

Nach dem Stand der Technik werden derartige Abwässer durch Abscheideanlagen, insbesondere Leichtphasenabscheider und Ultrafiltrationsanlagen soweit gereinigt, dass sie als Abwasser in die kommunale Abwasserkanalisation eingeleitet werden können. Durch die Abscheide- und Ultrafiltrationsbehandlung wird bereits eine deutliche Reduktion der Kohlenwasserstofffracht und insbesondere der ölhaltigen Phasen erzielt. Aufgrund gelöster organischer Inhaltsstoffe, wie z.B. Polyglykole weist ein derartig gereinigtes Abwasser jedoch weiterbin einen hohen CSB (Chemischer SauerstoffBedarf)-Gehalt auf, so dass es sich weiter um ein kritisches Abwasser handeln kann.

Aus der JP 54158057 A, DE 10925471 A1, US-A-6162361, WO 2004/099087 A, DE 3605338 A1, EP-A-0571744, US-A-5585531 und US-A-4201664 sind verschiedenste Wasseraufbefeitungsverfahren und Anlagen im Zusammenhang mit unterschiedlichsten Arten von Abwässern bekannt, die jedoch alle keine Behandlung von Abwässern einer Metallgießerei betreffen.

### OFFENBARUNG DER ERFINDUNG

### AUFGABE DER ERFINDUNG

Es ist deshalb Aufgabe der vorliegenden Erfindung. ein Verfahren und eine Vorrichtung bereit zu stellen, mit der das Abwasser aus Giessereien, insbesondere Metall- und besonders Leichtmetallgiessereien effektiver behandelt werden kann. Insbesondere soll die Menge hoch belasteten Abwassers aus wirtschaftlichen und Umweltgesichtspunkten deutlich verringert werden, wobei der Aufwand für die Herstellung und den Betrieb einer derartigen Vorrichtung gering gehalten werden soll.

### TECHNISCHE LÖSUNG

Diese Aufgabe wird gelöst mit einem Verfahren mit den Merkmalen des Anspruchs 1 sowie einer Vorrichtung mit den Merkmalen des Anspruchs 6. Vorteilhafte Ausgestaltungen sind Gegenstand der abhängigen Ansprüche.

Die Erfindung geht aus von der Erkenntnis, dass für die spezifischen Abwässer einer Metallgiesserei, die insbesondere Gemische aus Wasser und Formtrennstoffen, insbesondere spezielle Öl-Wasser-Emulsionen sowie weitere Verunreinigungen durch Schmieröle, Wärmeträgeröle, Kolbentrennstoffe und Hydraulikmedien aufweist, eine effektive Reinigung durch ein dreistufiges Verfahren ermöglicht wird, welches in einer ersten Stufe eine Abscheidung erster Schmutzstoffe und in einer zweiten Stufe die Filtration zweiter Schmutzstoffe sowie in einer dritten Stufe die Trennung des Abwassers durch umgekehrte Osmose in ein schadstoffarmes Permeat und schadstoffreiches Retentat vorsieht. Insbesondere können mit einem derartigen Verfahren die Abwässer so gereinigt werden, dass das schadstoffarme Permeat in einem geschlossenen Kreislauf wieder als Basis für die Formtrennstoff-Wasser-Gemische eingesetzt werden kann. Alternativ kann das Wasser als Recycling-Wasser auch für andere Zwecke, wie beispielsweise als Kühl- oder Waschwasser eingesetzt werden (halbgeschlossener Kreislauf). Dies verringert die Menge an Abwasser, die in die Kanalisation abgegeben werden muss, erheblich.

Die erste Stufe des dreistufigen Reinigungsverfahrens umfasst insbesondere die Abscheidung von Feststoffen und/oder Leichtphasen, wie beispielsweise der nicht gelösten Öle aus dem Öl-Wasser-Gemisch, durch Sedimentationsbehälter, Leichtflüssigkeitsabscheider oder Membranverfahren.

Der zweite Schritt des Reinigungsverfahrens wird durch eine Ultrafiltration verwirklicht.

Das nach dem erfindungsgemäßen Verfahren gereinigte Abwasser, das so genannte Permeat kann in nachfolgenden Schritten weiteren Reinigungsprozessen unterzogen werden, insbesondere können Wiederholungen der ersten Reinigungsschritte des dreistufigen Verfahrens mit oder ohne Abwandlung durchgeführt werden. So kann beispielsweise die Trennung durch umgekehrte Osmose wiederholt mit gleichen oder unterschiedlichen Membranen durchgeführt werden. Auch andere Reinigungsverfahren können zusätzlich eingesetzt werden, wie beispielsweise Adsorptionsverfahren und/oder Bestrahlungsverfahren.

Auch das Retentat, also das mit den Kohlenwasserstoffen angereicherte Abwasser kann einer weiteren Verwendung zugeführt werden, wie beispielsweise einem Verdampfer zur Abtrennung wieder verwertbarer Elemente, wie Öle und Fette.

### KURZBESCHREIBUNG DER FIGUREN

Weitere Vorteile, Kennzeichen und Merkmale der vorliegenden Erfindung werden bei der nachfolgenden detaillierten Beschreibung eines Ausführungsbeispiels an Hand der beigefügten Figur näher beschrieben. Die Figuren zeigen dabei in rein schematischer Weise in
- Fig. 1: eine erfindungsgemäße Anordnung zur Behandlung von Abwässern einer Metallgießerei; und in
- Fig. 2: eine weitere erfindungsgemäße Anordnung zur Behandlung von Abwässern einer Metallgießerei.

### BEVORZUGTE AUSFÜHRUNGSFORMEN

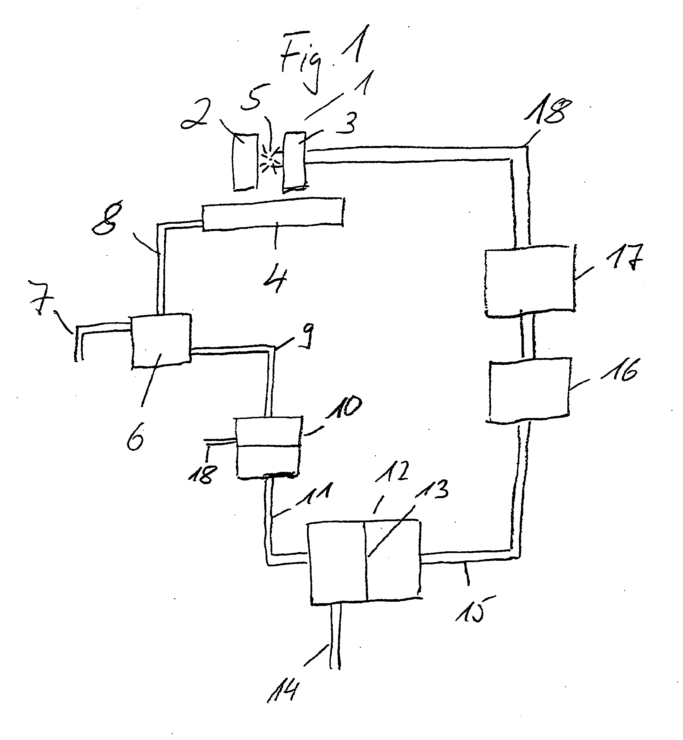

Die Figur 1 zeigt in einer rein schematischen Darstellung die Anordnung einer erfindungsgemäßen Anlage zur Behandlung von Abwässern. Im Bereich einer Druckgussmaschine 1 mit den beiden Formhälften 2 und 3 ist ein Auffangbehälter 4 vorgesehen, welcher den so genannten Overspray einer Sprüheinrichtung 5 zur Aufbringung von Formtrennstoffen auf die Formhälften 2 und 3 auffängt. Zusätzlich zu dem Überschuss an Formtrennstoffen, der bei dem Sprühprozess nicht auf die Formhälften 2 und 3 gelangt, werden durch den Auffangbehälter 4 auch weitere Stoffe, die aus Leckagen der Druckgussmaschine stammen, wie z.B. Schmieröle, Wärmeträgeröle, Kolbentrennstoffe und Hydraulikmedien aufgefangen.

Von dem Auffangbehälter 4 gelangen die aufgefangenen Stoffe, welche beispielsweise zusätzlich durch Wasser aus dem Auffangbehälter 4 gespült werden können, durch die Leitung 8 zu einem Leichtphasenabscheider 6, der aus dem Abwasser die oben schwimmenden Leichtphasen, wie z.B. Öle der Öl-Wasser-Emulsion abscheidet und durch die Leichtphasenableitung 7 einer entsprechenden Entsorgung zuführt.

Das derart einstufig vorgereinigte Abwasser gelangt durch die Leitung 9 in eine Ultrafiltrationsanlage 10, aus welcher durch den Ablauf 18 die ausgefilterten Stoffe abgegeben werden.

Das verbleibende Abwasser gelangt über die Leitung 11 in die Trenneinheit 12, die eine Membran 13 aufweist. Die Trenneinheit 12 arbeitet nach dem Prinzip der umgekehrten Osmose, wobei das Abwasser in Retentat und Permeat getrennt wird. Das mit den Schmutzstoffen angereicherte Retentat wird über die Leitung 14 abgeführt und beispielsweise einem Verdampfer (nicht gezeigt) zugeführt.

Das Permeat, welches das von Kohlenwasserstoffen gereinigt Abwasser darstellt, wird über die Leitungen 15 und 18 wieder zur Sprühdüse 5 zugeführt, wo es mit entsprechenden Zusatzstoffen als Teil des Formtrennmittels wieder auf die Gießformhälften 2 und 3 gesprüht wird. Auf diese Weise wird ein geschlossener Kreislauf für das Wasser, das als Formtrennstoffanteil verwendet wird, gewährleistet. Genauso können entsprechende Kreisläufe auch für Kühl- oder Waschwasser realisiert werden, wobei hier sowohl geschlossene Kreisläufe, d.h. Kreisläufe bei denen das Abwasser wieder seinem ursprünglichen Einsatzzweck zugeführt wird, verwirklicht werden können, als auch halb geschlossene Kreisläufe, bei denen das recycelte Abwasser einem anderen Zweck zugeführt wird.

Auf dem Weg von der Trenneinheit 12 zur weiteren Verwendung als Prozesswasser kann das Abwasser in Pufferbehältern 16 zwischengespeichert und/oder in zusätzlichen Reinigungsstationen 17 weiter gereinigt werden, wenn beispielsweise der spätere Einsatzzweck eine zusätzliche Reinigungsstufe notwendig macht. Die zusätzliche Reinigungseinheit 17 kann dabei jede geeignete Reinigungseinrichtung sein, wie beispielsweise Adsorptionseinrichtungen oder zusätzliche Vorrichtungen, die nach dem Membrantrennverfahren arbeiten, also auch eine weitere Stufe der Reinigung nach dem Prinzip der umgekehrten Osmose. Somit können auch mehrere Reinigungsschritte nach dem Prinzip der umgekehrten Osmose, beispielsweise unter Verwendung unterschiedlicher Membranen hintereinander geschaltet sein.

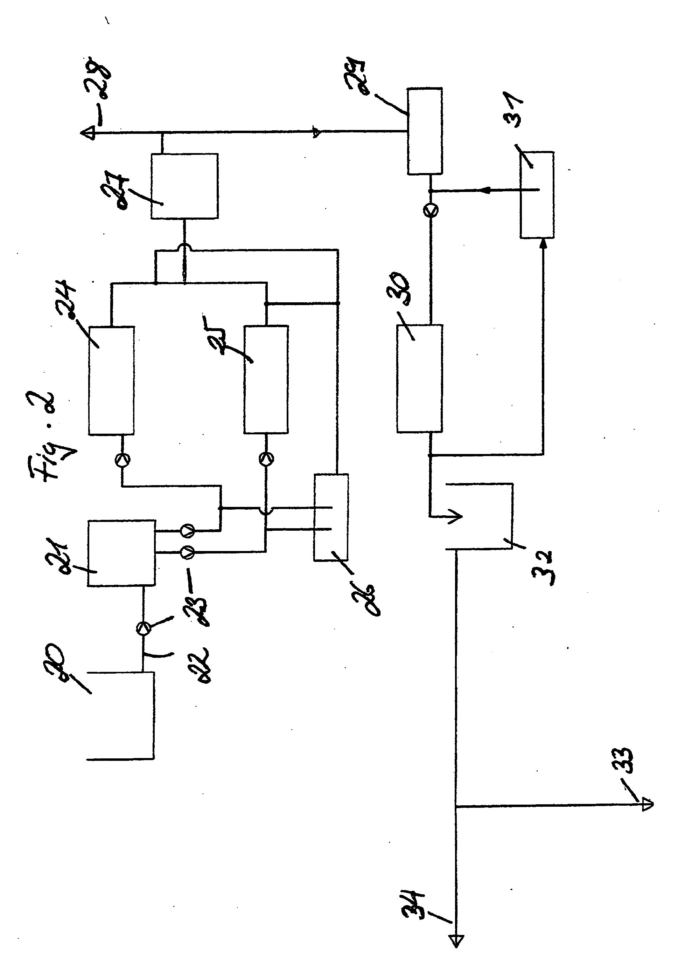

Die Figur 2 zeigt eine weitere Ausführungsform eine erfindungsgemäßen Anlage zur Behandlung von Abwasser, bei welcher das zu reinigende Wasser in einem Speichertank 20 aufgefangen und zwischengelagert wird. Von dort wird es durch die allgemein mit 22 bezeichneten Leitungen und die darin vorgesehenen Pumpen 23 in einen Arbeitsbehälter 21 überführt, welcher als Sedimentationsbehälter und/oder Leichtphasenabscheider ausgebildet ist, um Feststoffe und/oder Öle durch Sedimentation und/oder Leichtphasenabscheidung abzuscheiden. Aus diesem Arbeitsbehälter 21 wird das von den Feststoffen und/oder Ölen vorgereinigte Abwasser den Ultrafiltrationsanlagen 24 und 25 zugeführt, bei welchen durch Ultrafiltration weitere Schmutzstoffe aus dem Wasser entfernt werden.

Nach der Ultrafiltrationsstufe in den Ultrafiltrationsanlagen 24 und 25 wird das entsprechend gereinigte Wasser dem Auffangbehälter 27 zugeführt, von wo aus es entweder in die Abwasserkanalisation 28 oder zur weiteren Aufbereitung in den Arbeitsbehälter 29 weitergeleitet wird. Der Arbeitsbehälter 29 dient der Zwischenspeicherung und Pufferung für die anschließende, umgekehrte Osmose, die in der Vorrichtung 30 vorgenommen wird. Das daraus entstehende Permeat wird im Auffangbehälter 32 zwischengespeichert, bevor es über die Leitung 34 in die Produktion zur Wiederverwertung zurückgeführt wird oder über den Kanal 33 der Abwasserkanalisation übergeben wird.

Bei der Anlage der Figur 2 ist zur Reinigung der Ultrafiltrationsstufen 24, 25 ein Reinigungsbehälter 26 und zur Reinigung der Anlage zur umgekehrte Osmose 30 ein Reinigungsbehälter 31 vorgesehen.

Der Reinigungsbehälter 26 ist mit den Ultrafiltrationsanlagen 24 und 25 in einem geschlossenen Kreislauf verbunden, so dass zur Reinigung Wasser oder allgemein Reinigungsflüssigkeit aus dem Reinigungsbehälter 26 in umgekehrter Richtung durch die Ultrafiltrationsanlagen 24 und 25 gepumpt werden kann.

In gleicher Weise kann zur Reinigung der Anlage für die umgekehrte Osmose 30 Wasser oder Reinigungsflüssigkeit aus dem Reinigungsbehälter 31 in einem geschlossenen Kreislauf durch die Anlage zur umgekehrten Osmose 30 gepumpt werden.

## Patentansprüche

1. Verfahren zur Behandlung von Abwässern einer Metallgießerei die Formtrennstoffe enthalten, insbesondere einer Leichtmetallgießerei, bei welchem das Abwasser zunächst durch Abscheidung erster Schmutzstoffe in Form von Feststoffen und / oder Leichtphasen und Filtration zweiter Schmutzstoffe durch Ultrafiltration vorgereinigt wird,
wobei
nachfolgend eine weitere Trennung das Abwassers durch umgekehrte Osmose in schadstoffarme Permeat und schadstoffreiches Retentat erfolgt und das Permeat als Prozesswasser in der Gieβvorrichtung der Gießerei eingesetzt wird.

2. Verfahren nach einem der vorhergehenden Ansprüche,
**dadurch gekennzeichnet, dass**
das Permeat als Prozesswasser als Teil von Formtrennstoffen oder als Kühl- oder Waschwasser eingesetzt wird.

3. Verfahren nach einem der vorhergehenden Ansprüche,
**dadurch gekennzeichnet, dass**
das Permeat nachfolgend durch Adsorptionsverfahren und/oder Bestrahlungsverfahren weiter gereinigt wird.

4. Verfahren nach einem der vorhergehenden Ansprüche,
**dadurch gekennzeichnet, dass**
das Retentat thermisch nachbehandelt wird, insbesondere in einem Verdampfer getrennt wird.

5. Verfahren nach einem der vorhergehenden Ansprüche,
**dadurch gekennzeichnet, dass**
das Abwasser organische Substanzen umfasst.

6. Metallgießerei, insbesondere Leichtmetallgießerei, mit Abwasserbehandlungsanlage zur Durchführung des Verfahrens nach einem der vorhergehenden Ansprüche, wobei im Bereich einer Gießvorrichtung (1), insbesondere einer Druckgussmaschine mindestens ein Auffangbehälter (4) vorgesehen ist, der über eine oder mehrere Leitungen mit einer ersten Vorreinigungseinrichtung (7) mit einem Feststoff- und/oder Leichtphasenabscheider, und einer nachgeschalteten zweiten Vorreinigungseinrichtung (10) mit einer Ultrafiltrationseinrichtung verbunden ist,
wobei
im Anschluss an die zweite Vorreinigungseinrichtung (10) eine Trenneinheit (12) auf Basis der umgekehrten Osmose und ein Rücklauf (15, 18) für das Permeat der Trenneinheit (12) zur Gießvorrichtung vorgesehen sind.

7. Anlage nach Anspruch 6,
**dadurch gekennzeichnet, dass**
die Ultrafiltrationseinheit Membranen aus Keramik und/oder die Trenneinheit (12) hoch temperaturbeständige Membranen für Temperaturen bis 60°C umfasst.

8. Anlage nach einem der Ansprüche 6 oder 7,
**dadurch gekennzeichnet, dass**
der Rücklauf (15, 18) Pufferbehältet (16), zusätzliche Reinigungseinrichtungen (17) und/oder Mischvorrichtungen umfasst.

9. Anlage nach einem der Ansprüche 6 bis 8,
**dadurch gekennzeichnet, dass**
ein Verdampfer für das Retentat vorgesehen ist.

## Claims

1. Method for treating wastewater from a metal foundry, especially a light metal foundry, that contain mould-release substances, in which the wastewater is initially precleaned by deposition of first contaminants in the form of solids and/or light non-aqueous phase liquids and by filtration of second substances by ultrafiltration, wherein
subsequently a further separation of the wastewater proceeds by means of reverse osmosis into permeate which is low in contaminants and retentate which is rich in contaminants and the permeate is used as process water in the casting apparatus of the foundry.

2. Method in accordance with the previous claim,
**characterized by** the fact that
the permeate used as process water serves as part of mould-release substances or as cooling water or wash water.

3. Method in accordance with any of the previous claims,
**characterized by** the fact that
the permeate is subsequently further cleaned by adsorption methods and or/irradiation methods.

4. Method in accordance with any of the previous claims,
**characterized by** the fact that
the retentate is thermally post-treated, especially is separated in an evaporator.

5. Method in accordance with any of the previous claims,
**characterized by** the fact that
the wastewater comprises organic substances.

6. Metal foundry, especially a light metal foundry, with wastewater-treatment plant, for the purpose of performing the method in accordance with any of the previous claims, wherein at least one catch vessel (4) is provided in the vicinity of the casting apparatus (1), especially a die-casting machine, and is connected via one or more lines to a first precleaning device (7) with a solids and/or light non-aqueous phase liquids separator, and to a downstream second precleaning device (10) with an ultrafiltration device,
wherein
provided after the second precleaning device (10) is a separator unit (12) based on reverse osmosis and a return (15, 18) for the permeate of the separator unit (12) to the casting apparatus.

7. Plant in accordance with claim 6
**characterized by** the fact that
the ultrafiltration unit comprises membranes made from ceramic and/or the separator unit (12) comprises heat-resistant membranes for temperatures up to 60 °C.

8. Plant in accordance with claim 6 or 7,
**characterized by** the fact that
the return (15, 18) comprises buffer vessels (16), additional cleaning devices (17) and/or mixing apparatus.

9. Plant in accordance with any of claims 6 to 8,
**characterized by** the fact that
an evaporator is provided for the retentate.

## Revendications

1. Procédé pour le traitement d'eaux usées d'une fonderie de métaux qui contiennent des agents de démoulage, en particulier d'une fonderie de métaux légers, dans lequel les eaux usées sont tout d'abord préépurées par séparation de premières matières polluantes sous forme de matières solides et/ou de phases légères et par filtration de secondes matières polluantes par ultrafiltration,
cependant qu'une autre séparation des eaux usées en perméat à faible concentration de polluants et en rétentat à forte concentration de polluants est ensuite effectuée par osmose inverse et que le perméat est utilisé comme eau de process dans le dispositif de coulage de la fonderie.

2. Procédé selon l'une des revendications précédentes,
**caractérisé en ce**
**que** le perméat est utilisé comme eau de process comme partie des agents de démoulage ou comme eau de refroidissement ou comme eau de lavage.

3. Procédé selon l'une des revendications précédentes,
**caractérisé en ce**
**que** le perméat continue ensuite à être épuré par un procédé d'adsorption et/ou d'irradiation.

4. Procédé selon l'une des revendications précédentes,
**caractérisé en ce**
**que** le rétentat est retraité thermiquement, en particulier est séparé dans un évaporateur.

5. Procédé selon l'une des revendications précédentes,
**caractérisé en ce**
**que** les eaux usées comprennent des substances organiques.

6. Fonderie de métaux, en particulier fonderie de métaux légers, avec une installation de traitement des eaux usées pour exécuter le procédé selon l'une des revendications précédentes, au moins un réservoir collecteur (4) étant prévu dans la zone d'un dispositif de coulage (1), en particulier d'une machine à coulée sous pression, réservoir qui est relié par une ou plusieurs conduites à un premier dispositif de préépuration (7) avec un séparateur de matières solides et/ou de phases légères et à un second dispositif de préépuration (10) placé en aval avec un dispositif d'ultrafiltration,
une unité de séparation (12) sur la base de l'osmose inverse étant prévue après le second dispositif de préépuration (10) et un retour (15, 18) étant prévu pour le perméat de l'unité de séparation (12) vers le dispositif de coulage.

7. Installation selon la revendication 6,
**caractérisée en ce**
**que** l'unité d'ultrafiltration comprend des membranes en céramique et/ou l'unité de séparation (12) comprend des membranes très résistantes aux températures élevées pour des températures jusqu'à 60 °C.

8. Installation selon l'une des revendications 6 ou 7,
**caractérisée en ce**
**que** le retour (15, 18) comprend des réservoirs tampons (16), des dispositifs d'épuration supplémentaires (17) et/ou des dispositifs de mélange.

9. Installation selon l'une des revendications 6 à 8,
**caractérisée en ce**
**qu'**il est prévu un évaporateur pour le rétentat.
